# FASCICULE DE BREVET EUROPEEN

(11) **EP 0 382 601 B1**
(45) Date de publication et mention de la délivrance du brevet: **05.01.1994**
(21) Numéro de dépôt: 90400270.6
(22) Date de dépôt: 01.02.1990
(51) Int. Cl.: H04N 7/14

(54) **Terminal de communication sonore et visuelle à réglages perfectionnés**
Ton- und Sichtkommunikationsendgerät mit verbesserten Einstellungen
Terminal for sound and visual communication with improved adjustments

(30) Priorité: 03.02.1989 FR 8901408
(43) Date de publication de la demande: 16.08.1990
(73) Titulaire: FRANCE TELECOM, 75015 Paris (FR)
(72) Inventeur: Guichard, Jacques, F-75015 Paris (FR); Buchner, Georges, F-75012 Paris (FR); Isckia, Alain, F-94400 Vitry sur Seine (FR)
(74) Mandataire: Martin, Jean-Jacques

(56) Documents cités:
- DE-A- 3 600 914
- US-A- 4 485 400
- IEEE JOURNAL ON SELECTED AREAS IN COMMUNICATIONS, vol. SAC-4, no. 4, juillet 1986, pages 625-632, New York, US; M. Tasto: "Terminals for broad-band office communications"
- REVIEW OF THE ELECTRICAL COMMUNICATIONS LABORATORIES, vol. 36, no. 2, mars 1988, pages 233-237, Tokyo, JP; G. Suzuki et al.: "Small screen video communication terminal (scopephone)"
- PATENT ABSTRACTS OF JAPAN, vol. 12, no. 452 (E-687)(3299), 28 novembre 1988 & JP-A-63 180 283
- PATENT ABSTRACTS OF JAPAN, vol. 13, no. 280 (E-779)(3628), 27 juin 1989 & JP-A-10 67 089

## Description

La présente invention a trait d'une façon générale au domaine de la visiophonie, et concerne plus particulièrement des perfectionnements, en vue d'un plus grand confort d'utilisation, apportés aux terminaux de communication visuelle et sonore tels que des visiophones.

Dans les terminaux de communication visuelle et sonore connus, la direction de visée de la caméra est généralement fixe. Cela signifie que, pour permettre au sujet de se déplacer dans une certaine mesure dans le champ de la caméra sans que l'interlocuteur distant ne perde son image, l'angle de prise de vues, déterminé par la longueur focale de l'objectif, doit être relativement large. Cela signifie par suite que l'écran du visiophone distant restitue une image sur laquelle le sujet occupe une place relativement peu importante. En d'autres termes, il est vu "de loin". Ce phénomène est en outre accentué par le fait que les écrans de visiophones sont généralement de petites dimensions.

Dans le même temps, des études ont démontré que le visiophone ne trouvait son intérêt auprès des utilisateurs que si l'interlocuteur distant était vu "de près", c'est-à-dire avec un angle de prise de vues plus réduit et dont une focale plus longue. Cette exigence soulève donc la difficulté qui consiste en ce qu'au moindre mouvement, le sujet observé risque de sortir au moins partiellement du champ de la caméra. A cet égard, on peut noter que les moyens d'assistance au positionnement, tels que décrits par exemple dans le brevet US-A-3 544 715, se trouvent inutilisables dans la pratique, car ils exigent de la part de l'usager un effort de concentration trop important. Plus précisément, ces dispositifs peuvent donner satisfaction sur le plan technique, mais non sur le plan ergonomique.

On connaît certes par le documents Review of the Electrical Communications Laboratories, vol. 36, n°2, mars 1988, pages 233-237, Tokyo, JP et IEEE Journal on selected areas in communications, vol. SAC-4, n° 4, juillet 1986, pages 625-632, New York, USA, M. TASTO : "Terminals for Broadband Office Communications", ainsi que par le document USA-4 485 400, un terminal conforme au préambule de la revendication 1.

L'utilisation peut ainsi se déplacer dans le voisinage du terminal, et commander la distance focale ou l'orientation de l'objectif de la caméra en fonction de ces déplacements, en agissant par exemple sur des touches de son poste téléphonique situé à distance du terminal lui-même.

Cette solution connue est cependant peu pratique sur le plan ergonomique, car l'utilisateur doit toujours prendre garde à modifier les réglages lui-même à chaque fois qu'il se déplace.

Ainsi, l'état de la technique connu n'enseigne aucune solution pratique qui permette d'observer "de près" l'interlocuteur distant tout en lui permettant de se déplacer relativement librement par rapport au terminal. Dans le même temps, il apparaît que ces deux exigences contradictoires vont s'avérer fondamentales pour le succès à grande échelle de la visiophonie.

La présente invention vise donc à remédier aux limitations de la technique antérieure, en proposant un terminal du genre visiophone dans lequel le sujet distant puisse être observé "de près" sans devoir occuper une position extrêmement figée devant la caméra de son propre terminal, ou modifier lui-même si nécessaire les réglages de sa caméra.

Plus généralement, la présente invention a pour objet de proposer un terminal dans lequel l'interlocuteur n'ait pas à subir, sans possibilité d'intervention , une dégradation, génératrice d'inconfort, dans la qualité des informations d'image et éventuellement de son reçues sur son propre terminal.

Ainsi la présente invention concerne un terminal de communication sonore et visuelle selon la revendication 1.

Un avantage essentiel de l'invention réside en ce qu'on peut ainsi effectuer le réglage du ou des paramètres, en temps réel, à partir de l'un ou l'autre des terminaux en communication, au choix des utilisateurs.

Des aspects préférés, mais non limitatifs, du terminal selon l'invention sont les suivants :
- à l'établissement d'une communication avec un autre terminal, les moyens de commutation sont en mode local.
- le basculement des moyens de commutation d'un mode à l'autre sont commandés par l'unité centrale.
- il comprend en outre un moyen pour engendrer une information d'autorisation de basculement en mode distant, et l'unité centrale comprend des moyens pour ne basculer les moyens de commutation sur le mode distant que lorsqu'une telle information d'autorisation est à la fois engrendrée dans le terminal et reçue d'un autre terminal.
- l'unité centrale comprend un moyen de reconnaissance d'un code reçu d'un autre terminal et commande le basculement desdits moyens de commutation sur le mode distant lorsqu'un code reçu est reconnu.
- les moyens de réglage comprennent des moyens d'entraînement motorisés pour faire varier la direction de visée de la caméra.
- les moyens d'entraînement font varier la direction de visée de la caméra en site et en azimut.
- lorsque le boîtier du terminal comprend une partie fixe et une partie mobile articulée à la partie fixe autour d'un axe horizontal et abritant la caméra, lesdits moyens d'entraînement agissent avantageusement sur la partie du boîtier qui abrite la caméra.
- les moyens d'entraînement sont également aptes à faire pivoter ladite partie du boîtier qui abrite la caméra autour d'un axe perpendiculaire à la fois à l'axe d'articulation et à l'axe de visée de la caméra.
- les moyens d'entraînement font varier la hauteur de la caméra et la direction en azimut de son axe de visée.
- les moyens d'entraînement comprennent soit deux moteurs électriques pouvant être commandés individuellement, soit un moteur électrique unique et deux embrayages reliés au moteur.
- les moyens d'entraînement comprennent un support de l'optique de la caméra comportant trois points d'appui disposés selon un triangle rectangle, le point situé à l'angle droit du triangle étant constitué par une liaison à rotule, et des moyens motorisés pour faire varier la position des deux autres points d'appui dans une direction essentiellement perpendiculaire au plan du triangle.
- le ou les paramètres de prise de vue sont choisis dans le groupe comprenant la direction de visée de la caméra et/ou de son optique, la longueur focale de l'optique, l'ouverture de l'optique et la colorimétrie de la caméra.
- si le terminal comprend en outre une source lumineuse d'éclairage du sujet, les moyens de réglage peuvent agir sur l'intensité de la source, qui constitue l'un des paramètres de prise de vues.
- les moyens de réglage sont également aptes à agir sur des paramètres de transmission du son.
- dans le mode de réglage distant, les informations de réglage sont véhiculées dans le réseau sous forme de mots numériques incorporés à des intervalles de temps prédéterminés dans la section "contrôles et indications" d'une trame normalisée de transmission numérique.
- lorsque le microphone et le haut-parleur sont incorporés à un combiné, les moyens de commande manuelle peuvent comprendre au moins une touche de commande prévue sur le combiné.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :
la figure 1 est une vue en perspective schématique d'un terminal du genre visiophone auquel peut s'appliquer l'invention,
la figure 2 est un diagramme schématique de l'architecture interne du visiophone de la figure 1.
la figure 3 est une vue en coupe verticale détaillée d'une partie d'un terminal conforme à un premier mode de réalisation de la présente invention,
la figure 4 est une vue en perspective schématique d'une partie d'un terminal selon un autre mode de réalisation de la présente invention,
la figure 5 est une vue en coupe verticale détaillée d'une partie d'un terminal selon un autre mode de réalisation encore de la présente invention,
la figure 6 est une vue en perspective schématique d'un partie d'un terminal selon un autre mode de réalisation encore de la présente invention,
la figure 7 est une vue de côté en coupe partielle de la partie illustrée sur la figure 6, et
la figure 8 est une vue de face en coupe partiellle d'une partie d'un terminal selon un autre mode de réalisation encore de la présente invention.

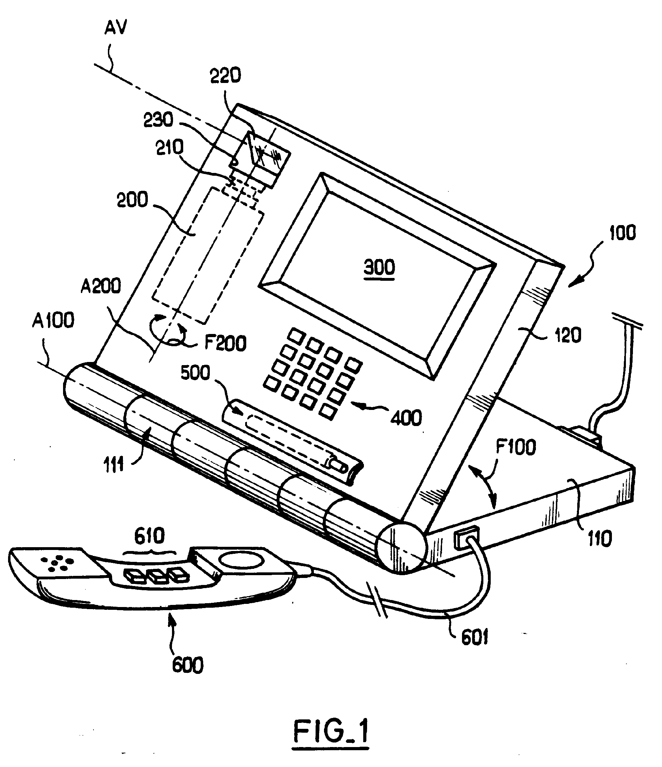

En référence tout d'abord à la figure 1, on y a représenté un terminal du genre visiophone, apte à entrer en communication avec d'autres terminaux de même nature par l'intermédiaire d'un réseau de transmission numérique à bas débit.

Le terminal comprend tout d'abord un boîtier 100 en comportant deux parties 110 et 120 articulées l'une à l'autre. La partie 110 est destinée à reposer horizontalement sur un support plan, tandis que la partie 120 est déplaçable et apte à être érigée comme illustré, pour prendre une inclinaison choisie, dans des limites déterminées, par rapport à l'horizontale.

Les parties 110 et 120 sont articulées l'une à l'autre autour d'un axe horizontal A100, matérialisé par un arbre 111 comportant des parties pouvant tourner les unes par rapport aux autres et respectivement solidaires desdites deux parties 110 et 120.

Un moteur électrique d'entraînement (non illustré sur la figure 1) permet de faire varier l'inclinaison de la partie 120 du boîtier par rapport à la partie 110 (flèche F100), à l'aide d'une transmission appropriée.

La partie supérieure 120 du boîtier abrite une caméra 200, un écran de visualisation 300, un clavier 400 et un dispositif d'éclairage d'appoint 500.

Le terminal comprend en outre un combiné 600 relié au boîtier par un câble 601 et abritant classiquement un microphone et un haut-parleur (non visibles). Le combiné comprend en outre un ensemble de touches de commande 610, qui sont aptes à transmettre des informations de commande au terminal par le câble 601, par exemple conformément à la demande de brevet français No. 88 10003 déposée le 25 juillet 1988.

La caméra 200 est de préférence du type à senseur solide (Charge Coupled Device) et est en l'espèce disposée à plat dans la partie 120 du boîtier, son objectif 210 étant situé en haut. Un miroir 220 disposé à 45 degrés au droit d'une fenêtre 230 formée dans la partie de boîtier 120, pour renvoyer vers l'objectif une image reçue depuis l'avant du terminal. L'axe optique ou axe de visée de la caméra est noté AV.

Par ailleurs, le terminal comprend en association avec la caméra un second moteur électrique (non représenté) apte à entraîner celle-ci, solidairement avec l'objectif 210 et le miroir 220, suivant la flèche F200 autour d'un axe A200 qui s'étend suivant l'axe de l'objectif, c'est-à-dire dans le plan de la partie de boîtier 120 et perpendiculairement à l'axe A100 et à l'axe de visée AV.

On comprend qu'en commandant de façon appropriée les deux moteurs électriques sus-mentionnés, on peut faire varier la direction de visée de la caméra 200 aussi bien en site qu'en azimut. Plus précisément, en modifiant l'inclinaison mutuelle des parties 110, 120 du boîtier, on peut incliner l'axe AV comme on le souhaite vers le haut ou vers le bas (modification de l'angle de site), tandis qu'en faisant tourner la caméra 200 et ses accessoires de prise de vue 210, 220 autour de l'axe A200 (flèche F200), on modifie la visée en direction latérale (modification de l'angle d'azimut).

Il est à noter que le terminal illustré sur la figure 1 n'est présenté qu'à titre d'illustration. Ainsi la présente invention s'applique également à des terminaux de types tout à fait différents, comme on le verra plus loin.

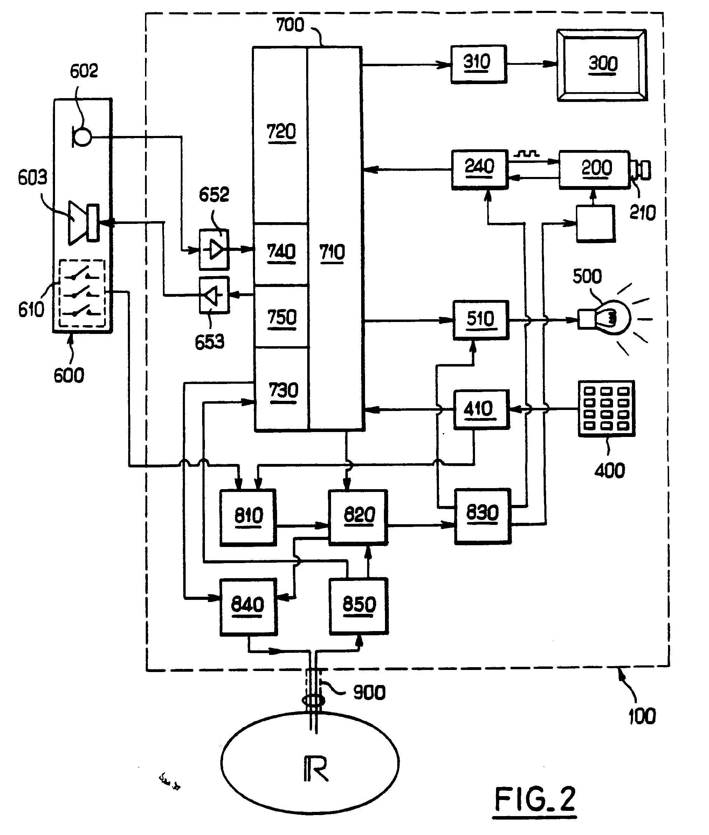

On a représenté sur la figure 2, sous forme de synoptique, la structure interne du terminal de la figure 1. Sur cette figure et sur toutes les autres, des éléments ou parties identiques ou similaires à ceux de la figure 1 sont désignés par les mêmes numéros de référence et ne seront en règle générale pas décrits à nouveau.

Le terminal comprend une unité centrale de traitement 700 comprenant un processeur 710, une mémoire 720 et une interface d'entrée sortie 730 elle-même reliée à un câble 900 pour la liaison du terminal avec d'autres terminaux de même nature par l'intermédiaire d'un réseau numérique à bas débit, noté R.

L'unité centrale 700 est reliée à la caméra 200 par l'intermédiaire d'un circuit de commande et d'interface approprié 240, et est apte à stocker sous forme numérique et codée (par compression d'image, etc...) les images fournies par la caméra à une cadence déterminée.

L'écran 300, qui est par exemple un écran à cristaux liquides, est attaqué par un circuit de commande approprié 310 recevant des informations numériques d'images en provenance de l'unité centrale.

Le clavier 400 est relié à un circuit de décodage de clavier 410, dont l'une des sorties est reliée à l'unité centrale 700.

L'intensité de la source lumineuse 500, destinée à envoyer vers le sujet observé par la caméra 200, peut être commandée via un circuit approprié 510, recevant des ordres de l'unité centrale 700. Ces ordres sont par exemple déterminés par une analyse de la luminance de l'image captée par la caméra.

Enfin le microphone 602 et le haut-parleur 603 sont reliés à l'unité centrale 700 via des circuits de filtrage et d'amplification respectifs 652, 653 et par des convertisseurs, à savoir un convertisseur analogique/numérique 740 pour le microphone et un convertisseur numérique/analogique 750 pour le haut-parleur.

Le terminal décrit jusqu'ici fonctionne de manière classique. Lorsqu'une communication visiophonique est établie avec un terminal distant de même nature, les images captées par la caméra 200, une fois numérisées et codées, ainsi que les sons captés par le microphone 602, également numérisés, sont transmis par le réseau, avec les protocoles d'échange de données appropriés, vers l'autre terminal, et ceci en temps réel. La liaison établie par le réseau R est bidirectionnelle et, dans le même temps, les informations numériques d'image et de son reçues de l'autre terminal, après conversion et décodage appropriés, sont reproduites sur l'écran 300 et dans le haut-parleur 603.

Conformément à un premier aspect essentiel de l'invention le terminal comprend des moyens de réglage de certains paramètres relatifs au son et/ou à l'image transmis à travers le réseau.

Ainsi l'on a représenté schématiquement sur la figure 2 une unité de réglage 830 qui est apte à envoyer des signaux de réglage vers divers éléments du terminal. Tout d'abord, l'unité 830 envoie des signaux à une unité d'entraînement motorisée 250 qui est mécaniquement associée à la caméra 200 et qui permet d'en modifier la direction de visée. De préférence, comme on l'a indiqué plus haut en référence à la figure 1, l'unité de motorisation 250 est capable de faire varier la direction de visée de la caméra en site et en azimut, comme on le verra en détail plus loin.

Optionnellement, l'unité de réglage 830 peut également commander, à l'aide d'autres moteurs appropriés, la mise au point, l'ouverture, la longueur focale de l'objectif de la caméra, de façon non illustrée.

On peut observer également que l'unité de réglage 830 est reliée au circuit électronique 240 de la caméra. Il est ainsi possible de régler d'autres paramètres relatifs à l'image formée, et notamment la colorimétrie.

Enfin, dans le présent exemple, l'unité de réglage 830 est capable d'envoyer au circuit 510 de commande de l'intensité de l'éclairage d'appoint des signaux destinés à faire varier cette intensité.

On peut observer sur la figure 2 que le circuit de réglage 830 est associé à un circuit de commande 810 et à un circuit de commutation 820, ainsi qu'à un multiplexeur 840 et à un démultiplexeur 850 intercalés respectivement sur les lignes de sortie et d'entrée des signaux numériques reliées au réseau R.

L'unité de commande 810 est reliée d'une part à une deuxième sortie du circuit 410 de décodage du clavier 400, et d'autre part aux touches de commande 610 prévues dans le combiné 600 du terminal. Plus précisément, les touches de commande 610 du combiné et certaines des touches du clavier 400 sont destinées à la commande des divers réglages sus-mentionnés, et des signaux de commande correspondant à leurs actionnements respectifs sont engendrés par l'unité de commande 810 et sont propres à être appliqués à l'unité de réglage 830 pour effectuer les réglages précités, en mode local.

Conformément à un autre aspect essentiel de la présente invention, le circuit de commutation 820 est intercalé entre le circuit de commande 810 et le circuit de réglage 820. Sous le contrôle d'une instruction spécifique envoyée par l'unité centrale 700, il est apte à prendre l'un parmi deux états.

Dans un premier état, correspondant au mode "local" précité, les commandes issues du circuit 810 sont appliquées au circuit de réglage 830. De la sorte, l'utilisateur du terminal contrôle lui-même les fonctions de réglage qui sont à sa disposition. Par exemple, les touches 610 prévues sur le combiné 600 lui permettent, sans avoir à se déplacer, de modifier à l'aide de l'unité motorisée 250 la visée de la caméra 200, pour l'adapter à sa posture du moment.

Pour aider l'utilisateur à effectuer un tel réglage, on peut prévoir dans le terminal des moyens qui, par exemple sous l'action d'une autre touche du combiné 610, appliquent temporairement à l'écran 300 l'image captée par la caméra 200. Pendant cette courte période d'auto-observation, déclenchée sur sa requête, l'utilisateur peut effectuer le réglage de visée comme précité pour être correctement cadré.

Dans un second état du circuit de commutation 820, correspondant à un mode de réglage dit "distant" ou "croisé", le commutateur 820 envoie sur la ligne de sortie de données, par l'intermédiaire du circuit multiplexeur 840, les informations de commande issues du circuit 810, à destination du terminal distant. Cette transmission par le réseau des informations de commande s'effectue en parallèle avec les informations d'image et de son, sans perturbation de ces dernières.

Dans le même temps, le circuit de commutation applique au circuit de réglage 830 des informations de commande en provenance du démultiplexeur 850. Ces informations sont envoyées par le terminal distant, via le réseau R, à destination du terminal local, exactement de la même manière que ce dernier a envoyé sur le réseau les informations de commande à destination du terminal distant. Le démultiplexeur 850 a pour objet d'extraire du signal numérique reçu par le terminal local ces informations numériques de commande.

Ainsi, dans ce second état du commutateur 820, chaque interlocuteur peut agir à distance, et au moins approximativement en temps réel, sur le ou les réglages d'image et/ou de son du terminal distant.

L'on arrive donc à la situation, particulièrement avantageuse sur le plan ergonomique, dans laquelle c'est la personne qui observe l'image qui effectue elle-même les réglages de cadrage, de mise au point, de zoom, etc.. au niveau de la caméra qui capte cette image et qui est la caméra distante.

Bien qu l'on ait illustré sur la figure 2 l'utilisation d'un multiplexage pour combiner les informations numériques d'image et de son avec les informations de commande à distance qui circulent entre les deux terminaux, il est bien entendu que ce n'est qu'à titre d'exemple, d'autres modes de transmission de ces informations étant possibles.

Par exemple, le circuit de commutation peut être conçu pour placer ces informations dans la mémoire vive 720 de l'unité centrale, en association avec les informations d'image et de son en instance d'envoi. Plus précisément, lorsque les deux terminaux communiquent par des trames normalisées, et notamment la trame H221 prescrite par le Comité Consultatif International Téléphonique et Télégraphique (C.C.I.T.T.), il est particulièrement avantageux que les signaux de télécommande à destination du terminal distant soient incorporés au canal de service d'une telle trame.

Bien entendu, les divers circuits sont conçus pour que les signaux de télécommande soient transmis en occupant un volume le plus réduit possible, compte-tenu notamment du fait que, pour la transmission d'images par un réseau numérique à bas débit, on travaille généralement aux limites de la capacité de transmission.

Par exemple, on peut utiliser pour ces informations un codage incrémentiel/décrémentiel consistant, pour chaque paramètre pouvant être modifié à distance, à lui affecter une information susceptible de prendre trois états (incrémentation, décrémentation, inaltération), ces informations étant décodées au niveau du terminal qui les reçoit pour commander les éventuelles variations d'un ou de plusieurs réglages courants.

Par ailleurs, il n'est pas indispensable que les télécommandes effectuées au niveau d'un terminal soient instantanément exécutées au niveau du terminal distant. Par exemple, les informations de télécommande peuvent être transmises à une cadence inférieure à la cadence de transmission des trames, et par exemple de 2 à 20 fois par seconde. Dans la pratique, les délais de réaction au niveau du terminal distant seront le plus souvent imperceptibles par les interlocuteurs.

Comme on peut le voir, le circuit de commutation est commandé par l'unité centrale 700. Plus précisément, il est particulièrement avantageux que, lors de l'établissement d'une communication visiophonique, le circuit de commutation soit dans son mode local. Ceci permet d'éviter qu'un correspondant, une fois la communication établie, puisse à sa guise explorer par des mouvements appropriés de la caméra, les locaux dans lesquels se trouve le visiophone appelé.

En outre, il est bien entendu souhaitable que le passage du mode local initial au mode "croisé" s'effectue simultanément dans les deux terminaux connectés, et seulement avec l'accord des deux interloculteurs.

Concrètement, on peut prévoir dans chaque terminal une touche d'autorisation du basculement, dont l'enfoncement provoque l'envoi vers l'autre terminal, de préférence par les mêmes moyens que décrit ci-dessus, d'une information correspondante. On peut prévoir en outre que l'unité centrale n'effectue le basculement du circuit de commutation associé vers le mode croisé qu'après avoir constaté que les deux interloculteurs ont enfoncé leurs touches d'autorisation respectives.

Par ailleurs, un terminal à cadrage télécommandable selon la présente invention peut trouver une application avantageuse dans la télésurveillance. Concrètement, on peut faire en sorte qu'un utilisateur d'un terminal local puisse établir unilatéralement une communication avec un terminal distant et faire basculer sur sa seule initiative les circuits de commutation des deux terminaux sur le mode croisé. La sécurité qui doit nécessairement accompagner ce type d'opération peut être assurée par exemple par une procédure d'envoi vers le terminal distant d'un code secret sous forme d'une suite de caractères, et en prévoyant dans l'unité centrale du terminal distant des moyens de reconnaissance de ce code et de basculement du circuit de commutation associé lorsque le code attendu est reconnu.

On va maintenant décrire un certain nombre de réalisations concrètes de moyens de réglage auxquels la fonction de télécommande selon l'invention s'applique préférentiellement. Il s'agit du réglage à distance de la direction de visée de la caméra 200, aussi bien en azimut qu'en site.

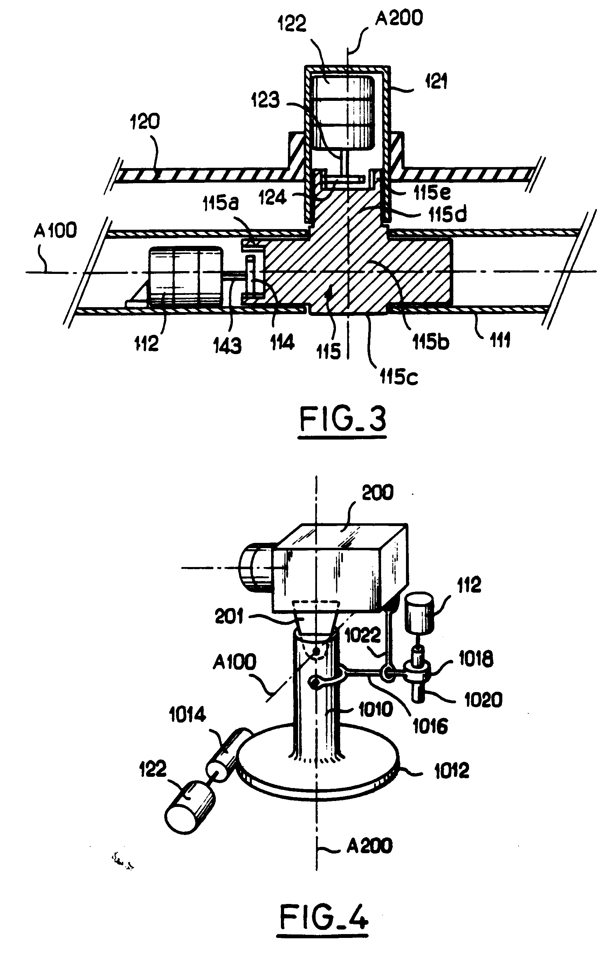

On a représenté sur la figure 3 une partie d'un terminal dont le boîtier est divisé en deux parties. Dans cet exemple, le changement de la direction de visée s'effectue par pivotement autour de deux axes orthogonaux de la partie 120 du boîtier qui abrite la caméra et son optique (non illustrées).

Sur la partie fixe du boîtier est monté rigidement un arbre creux 111 qui est interrompu en son milieu. Un premier motoréducteur électrique 112 est fixé à l'intérieur de l'arbre 111 et porte sur son arbre de sortie 113 un engrenage 114 qui est en prise avec la denture interne d'une couronne dentée 115a. Celle-ci est réalisée d'un seul tenant avec un élément de liaison 115. Cet élément se compose d'une partie de base essentiellement cylindrique 115b qui peut pivoter dans l'arbre creux 111 par le fait que ses deux extrémités, dont l'une porte la couronne 115a, sont engagées dans les ouvertures en vis-à-vis qui délimitent la région interrompue de l'arbre, et qui constituent deux paliers.

Pour assurer une continuité de diamètre extérieur entre l'arbre creux 111 et l'élément 115, ce dernier comporte une section centrale 115c de diamètre extérieur égal à celui de l'arbre. Par ailleurs, cette section centrale porte une seconde partie cylindrique 115d qui s'étend vers le haut perpendiculairement à l'axe de la partie de base 115b et qui porte à son extrémité une couronne à denture interne notée 115e. Un manchon 121 ouvert à son extrémité inférieure est engagé sur cette partie cylindrique 115d pour pouvoir y pivoter. Dans ce manchon est fixé un second motoréducteur électrique 122 qui porte sur son arbre de sortie 123 un engrenage 124 en prise avec la denture interne 115e. La partie mobile 120 du boîtier comporte à sa base une ouverture circulaire dans laquelle est fixé le manchon 121. Dans ce mode de réalisation, l'axe de visée de la caméra (non illustrée) est perpendiculaire aux axes A100 et A200 des pivotements engendrés par les moteurs 112 et 122.

On comprend qu'en actionnant le premier moteur 112 dans un sens ou dans l'autre, on fait pivoter la partie 120 du boîtier autour de l'axe horizontal A100 et l'on fait donc varier l'inclinaison en site de l'axe de visée de la caméra. En outre, un actionnement du moteur 122 dans un sens ou dans l'autre provoque le pivotement de cette même partie 120 du boîtier autour de l'axe A200, défini par l'axe de la partie cylindrique 115d de l'élément de liaison 115. On fait donc varier dans ce cas l'axe de visée latéralement, dans un plan perpendiculaire à A200, c'est-à-dire en première approximation en azimut.

On a illustré sur la figure 4 une double motorisation qui s'applique préférentiellement à un terminal dont le boîtier (non représenté) est d'un seul tenant, et offre un espace intérieur suffisant pour abriter la caméra 200 en position essentiellement horizontale, c'est-à-dire sans miroir de renvoi ou analogue.

Dans cette réalisation, la caméra 200 est articulée par une patte inférieure 201, autour d'un axe horizontal A100, à un montant vertical 1010 capable de pivoter autour de son axe A200. Ce montant est fixé à sa base à un engrenage 1012 de même axe A200, qui est en prise avec une vis sans fin 1014 entraînée par un motoréducteur approprié 122. La rotation du motoréducteur 122 provoque le pivotement de la caméra autour de l'axe A200, et permet donc le réglage de la direction en azimut de son axe de visée AV.

En outre, un bras 1016 est articulé sur le montant 1010, autour d'un axe horizontal parallèle à A100, et s'étend vers l'arrière. Il porte à son extrémité libre un écrou 1018 d'axe vertical dans lequel est engagée une vis sans fin 1020 pouvant être entraînée en rotation par un second motoréducteur 112. Par ailleurs, une biellette 1022 est articulée à une extrémité supérieure dans la région postérieure de la caméra et à une extrémité inférieure en un point intermédiaire du bras 1016. L'on comprend qu'en entraînant le moteur 112 dans un sens ou dans l'autre, on fait varier l'angle de site de l'axe de visée AV de la caméra, le déplacement de l'écrou 1018 verticalement le long de la vis sans fin 1020 provoquant un déplacement proportionnel de l'arrière de la caméra qui pivote autour de l'axe A100.

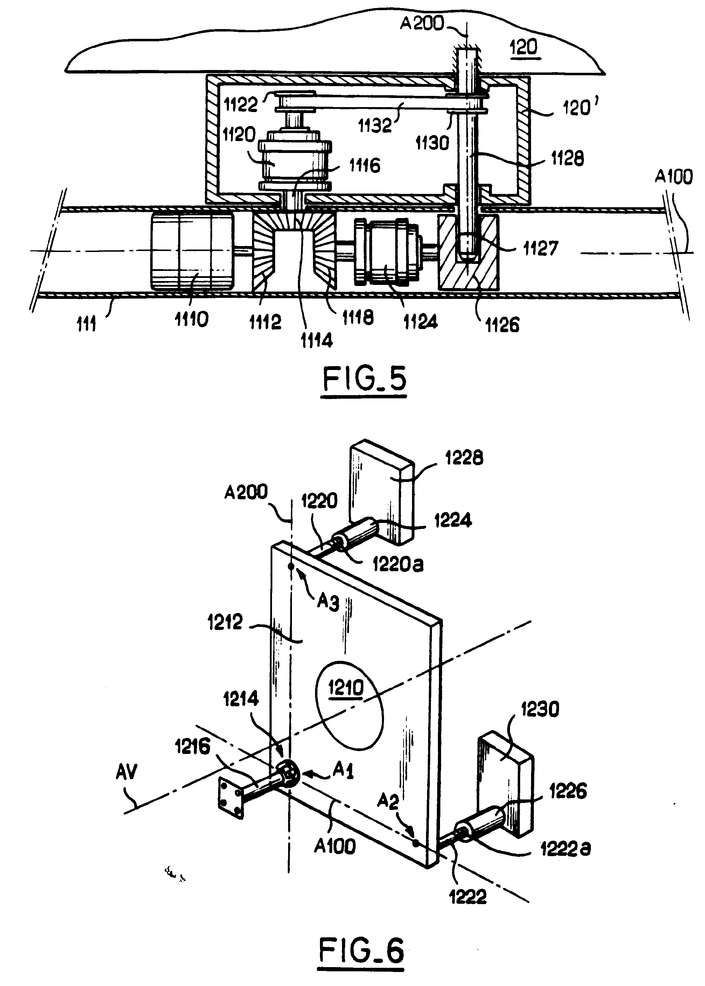

La figure 5 illustre un mode de réalisation dans lequel un motoréducteur unique 1100 est prévu pour faire varier aussi bien l'angle de site que l'angle d'azimut de la direction de visée de la caméra (non illustrée sur cette figure). Un arbre creux 111 abrite le moteur 1110, qui porte à l'extrémité de son arbre de sortie un engrenage conique 1112. Ce dernier engrène avec un autre engrenage conique 1114 monté pivotant sur un axe vertical 1116 traversant la paroi supérieure de l'arbre creux 111. L'engrenage 1114 engrène en outre avec un autre engrenage conique 1118 situé en vis-à-vis du premier. L'engrenage 1114 entraîne par l'intermédiaire d'un premier embrayage/frein électro-magnétique 1120 une poulie 1122 essentiellement coaxiale. L'engrenage 1118 entraîne par l'intermédiaire d'un second embrayage/frein électro-magnétique 1124 un élément de transmission 1126 de forme cylindrique, capable de pivoter dans l'arbre creux 111.

Cet élément 1126 comporte un logement radial 1127 dans lequel est montée pivotante l'extrémité inférieure d'une tige de liaison 1128 qui est fixée rigidement à son extrémité supérieure à la partie mobile 120 d'un boîtier du terminal, en traversant une partie de boîtier intermédiaire 120′. Cette tige porte rigidement, à la hauteur de la première poulie 1122, une seconde poulie 1130, et une courroie de transmission 1132 relie les deux poulies 1122 et 1130.

Chaque embrayage/frein est conçu pour prendre, par une commande électrique appropriée, l'un parmi deux états. Dans un premier état, d'embrayage, il transmet à l'arbre de sortie les mouvements de rotation de l'arbre d'entrée. Dans un second état, de débrayage et de freinage, l'arbre d'entrée (côté de l'engrenage associé) est fou, tandis que l'arbre de sortie (côté opposé à l'engrenage associé) est bloqué.

Dans un premier mode de réglage, l'embrayage 1120 bloque la poulie 1122, et par conséquent la poulie 1130, tandis que la rotation du motoréducteur 1110 est transmise, via les engrenages 1112, 1114 et 1118 et l'embrayage 1124, à l'élément de transmission 1126. La partie 120 du boîtier peut donc pivoter autour de l'axe A100 de rotation de cet élément, ce qui permet le réglage en site de l'axe de visée de la caméra.

Dans un second mode de réglage, les états des deux embrayages sont inversés, si bien que l'inclinaison de la partie mobile 120 du boîtier autour de l'axe A100 est maintenue fixe grâce au freinage assuré par l'embrayage 1124. Dans le même temps, l'embrayage 1120 transmet à la poulie 1122 la rotation du moteur, reçue via les engrenages 1112 et 1114; la courroie 1132 transmet cette rotation à la tige de liaison 1128, ce qui fait pivoter la partie mobile 120 du boîtier autour de l'axe A200 de pivotement de cette tige. On assure de cette manière le réglage de l'axe de visée de la caméra essentiellement en azimut.

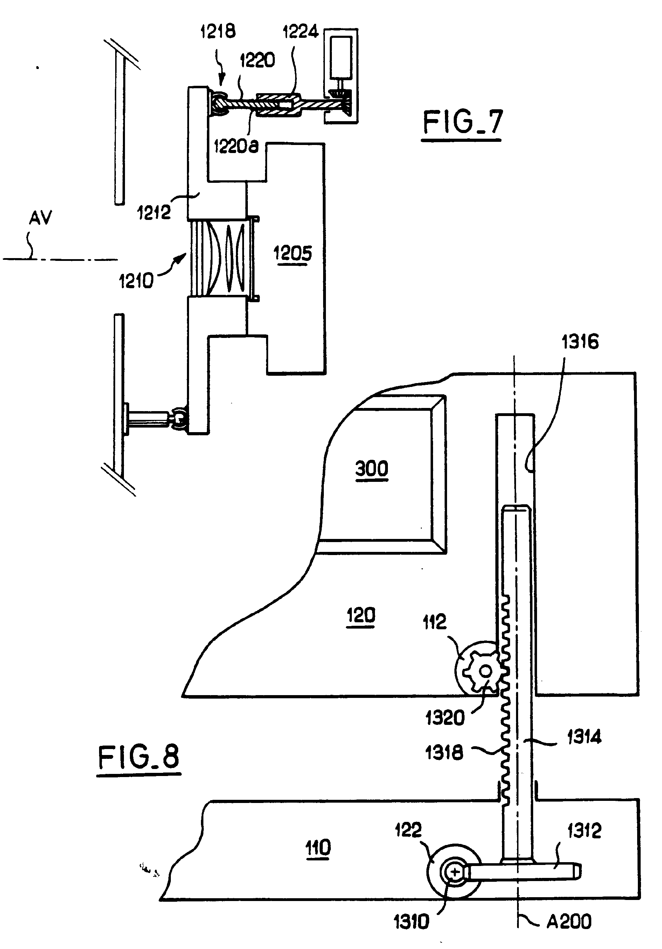

Les figures 6 et 7 illustrent un mode de réalisation de l'invention dans lequel la modification de la direction de visée de la caméra s'effectue en agissant de façon mécanique seulement sur l'optique de la caméra et sur le capteur à senseur solide de cette dernière, fixée solidairement à l'optique. Le reste de la caméra, et en particulier les circuits électroniques associés au capteur, sont fixes et reliés audit capteur par un câblage souple approprié.

De préférence, l'optique de la caméra est une optique à grande ouverture présentant un faible encombrement en profondeur, réalisée par exemple conformément aux principes exposés dans la demande de brevet français publiée No. 2 615 009.

Comme on peut l'observer, l'optique 1210 et le capteur 1205 de la caméra sont montés rigidement sur une plaque 1212 essentiellement perpendiculaire à l'axe de visée. Cette plaque est de forme essentiellement rectangulaire et définit trois points d'appui A1 à A3 disposés aux trois sommets d'un triangle rectangle, dont les deux petits côtés sont respectivement horizontal et vertical.

Le premier point d'appui A1, correspondant à l'angle droit du triangle, est relié à une partie fixe du boîtier du terminal, par exemple à la surface arrière de sa paroi avant, par l'intermédiaire d'une liaison à rotule 1214 et d'une tige de liaison 1216 dont l'extrémité opposée à la rotule est fixée rigidement à ladite paroi avant.

En outre, aux points d'appui A2 et A3 sont prévues également des liaisons à rotules, la liaison 1218 du point A3 étant visible sur la figure 7. Chaque liaison à rotule est établie entre la plaque 1212 et une tige, respectivement 1220 et 1222, qui porte à l'extrémité arrière un filetage, respectivement 1220a, 1222a. Ce filetage est en prise avec une douille taraudée, respectivement 1224 et 1226, qui est solidaire de l'arbre de sortie d'un motoréducteur, respectivement 1228 et 1230.

En entraînant le motoréducteur 1228, l'on fait pivoter la plaque porte-optique 1212 autour de l'axe A100 passant par les points d'appui A1 et A2, pour commander l'orientation en site de l'axe de visée AV de la caméra. De même, en entraînant le motoréducteur 1230, l'on fait pivoter la plaque 1212 autour de l'axe A200 qui passe par les points d'appui A1 et A3, pour commander l'orientation en azimut dudit axe de visée.

Ce mode de réalisation de l'invention est avantageux en ce que seule une partie du terminal petite et légère est conçue pour être déplacée. On peut donc utiliser une motorisation électrique et une transmission miniaturisées et économiques.

Enfin la figure 8 illustre une variante de réalisation dans lequel l'axe de visée de la caméra (non illustrée), peut être réglé non pas en site et en azimut comme on l'a décrit ci-dessus, mais en hauteur et en azimut.

A cet effet, le boîtier du terminal comporte une partie fixe 110 reposant sur un support plan et une partie déplaçable 120.

Dans la partie fixe est logé un premier motoréducteur 122 qui entraîne en rotation une vis sans fin 1310 qui elle-même fait tourner un engrenage 1312 d'axe vertical. Cet engrenage est monté rigidement à l'extrémité inférieure d'une tige de liaison 1314 qui fait saillie vers le haut à partir de la partie basse 110 du boîtier. La partie supérieure 120 est montée sur cette tige par l'intermédiaire d'un fourreau vertical complémentaire 1316 pour pouvoir coulisser verticalement, sans cependant pouvoir tourner par rapport à la tige. En outre, une crémaillère 1318 est prévue sur une face latérale de la tige 1314. Une roue dentée 1320 d'axe horizontal est montée dans la partie 120 du boîtier au voisinage de la tige 1314 et engrène avec la crémaillère 1318. La roue 1320 peut être sélectivement entraînée en rotation par un motoréducteur approprié 112 également logé dans la partie 120 du boîtier.

Lorsque le moteur 122 est mis en rotation, on règle la direction de visée de la caméra en azimut, par pivotement de la partie 120 du boîtier, qui porte rigidement ladite caméra, autour de l'axe A200 de la tige 1314 et de son engrenage 1312.

Lorsque c'est le moteur 112 qui est mis en rotation, la partie 120 du boîtier change de hauteur, pour ainsi relever ou abaisser l'axe de visée jusqu'à ce que le cadrage du sujet soit correct.

De préférence, la tige 1314 est creuse et permet d'acheminer entre les deux parties 110 et 120 du boîtier les divers câbles de connexion.

Bien entendu, dans toutes les formes de réalisation pratiques décrites plus haut, les divers mouvements engendrés par le ou les moteurs sont limités par des moyens classiques et bien connus de l'homme de l'art, et notamment par des micro-interrupteurs de fin de course ou encore par un système d'asservissement incluant des moyens de codage de position.

Par ailleurs, bien que l'on n'ait décrit concrètement ci-dessus que des moyens pour faire varier la direction ou la hauteur de visée d'une caméra de prises de vues, et comme on l'a indiqué plus haut, il est bien entendu que la présente invention s'applique au réglage de tout paramètre relatif au fonctionnement d'un terminal de type visophone, paramètre auquel on peut donner un caractère variable et réglable sous le contrôle de signaux électriques appropriés.

Par exemple, outre le contrôle à distance du cadrage par des moyens tels que décrits plus haut, l'invention permet également d'effectuer le réglage des paramètres suivants :
- longueur focale de l'objectif de la caméra (zoom); l'interlocuteur local ou distant peut ainsi resserrer le champ, pour être cadré de plus près, ou au contraire élargir le champ;
- colorimétrie de la caméra; on peut ainsi par exemple compenser les différences de température de couleur susceptibles d'apparaître (par exemple au soir qui tombe, etc...);
- ouverture de l'objectif; l'interlocuteur adapte ainsi la prise de vues à des conditions particulières, notamment un contre-jour;
- volume ou tonalité du son; en cas de baisse du niveau sonore au niveau du terminal distant, l'interlocuteur peut agir sur le gain de l'amplificateur de microphone de celui-ci, notamment pour garder un rapport signal/bruit convenable; la réponse spectrale du circuit de son peut également être modifiée en cas de mauvaise intelligibilité.

Par ailleurs, il est possible dans un même terminal de combiner des réglages motorisés, pouvant être télécommandés depuis le terminal distant, avec des réglages manuels accessibles directement à l'utilisateur Ainsi, par exemple pour le réglage de la direction de visée de la caméra, un mouvement manuel peut être effectué pour des variations grossières de cette direction, et le ou les moteurs peuvent être utilisés pour des réglages fins. Dans ce cas, pour éviter que les déplacements manuels ne détériorent la transmission ou les moteurs, on peut prévoir dans ladite transmission des limiteurs de couple ou des accouplements à frottement doux. De tels mécanismes peuvent également être utilisés pour éviter de telles détériorations lorsqu'un tel réglage manuel n'est pas prévu, mais que le terminal est exposé à des chocs accidentels.

Par ailleurs, les moyens de limitation du déplacement de la caméra peuvent consister en des commutateurs de fin de course reliés au(x) moteurs(x) pour en inverser le sens de rotation dès que la limite de cadrage correspondante est atteinte. L'interlocuteur peut ainsi effectuer un balayage horizontal ou vertical oscillant par l'enfoncement, sur le terminal local ou le terminal distant, d'une seule touche affectée à cette fonction.

On peut mentionner en outre un avantage particulier de la présente invention lorsque les visiophones sont utilisés en visioconférence, c'est-à-dire que plusieurs interlocuteurs communiquent avec un visiophone distant par un visiophone local unique. Dans ce cas, grâce à la possibilité de réglage à distance de la visée de la caméra et du zoom, l'usager distant peut à sa guise concentrer l'image sur l'interlocuteur de son choix, par exemple sur celui qui a la parole.

Enfin, bien que la description qui précède se limite au réglage de la visée de la caméra par déplacement de la caméra (ou de son optique) et/ou du boîtier, il est bien entendu que l'invention vise également le réglage de la visée par simple déplacement d'un miroir de renvoi tel que le miroir 220 de la figure 1.

## Revendications

1. Terminal de communication sonore et visuelle, du type comprenant un boîtier (100), une caméra de prise de vues (200) munie d'une optique (210, 1210) , un écran de visualisation (300), un microphone (602) et un haut-parleur (603), et une unité centrale (700) comprenant des moyens de codage/décodage d'informations d'images et de son et d'interfaçage en association avec ces éléments pour la communication avec un autre terminal de même type par l'intermédiaire d'un réseau de transmission numérique (R), ainsi que des moyens de réglage (830, 250, 240, 510) d'au moins un paramètre de prise de vues et des moyens de commande manuelle (810, 400, 610) aptes à engendrer des informations de commande pour le réglage du ou des paramètres,
caractérisé en ce qu'il comprend en outre :
des moyens de commutation (820) entre un mode de réglage local, dans lequel lesdites informations de commande sont appliquées auxdits moyens de réglage, et un mode de réglage distant, dans lequel lesdites informations de commande sont envoyées audit autre terminal à travers le réseau numèrique en parallèle avec lesdites informations d'images et de son, et dans lequel des informations de commande reçues dudit autre terminal, également à travers le réseau numérique et en parallèle avec les informations d'images et de son, sont appliquées auxdits moyens de réglage.

2. Terminal selon la revendication 1, caractérisé en ce qu'à l'établissement d'une communication, les moyens de commutation (820) sont en mode local.

3. Terminal selon la revendication 2, caractérisé en ce que les basculements des moyens de commutation (820) d'un mode à l'autre sont commandés par l'unité centrale (700).

4. Terminal selon la revendication 3, caractérisé en ce qu'il comprend en outre un moyen pour engendrer une information d'autorisation de basculement en mode distant, et en ce que l'unité centrale comprend des moyens pour ne basculer les moyens de commutation (820) sur le mode distant que lorsqu'une telle information d'autorisation est à la fois engrendrée dans le terminal et reçue d'un autre terminal.

5. Terminal selon la revendication 4, caractérisé en ce que l'unité centrale comprend un moyen de reconnaissance d'un code reçu d'un autre terminal et commande le basculement desdits moyens de commutation (820) sur le mode distant lorsqu'un code reçu est reconnu.

6. Terminal selon l'une des revendications 1 à 5, caractérisé en ce que les moyens de réglage comprennent des moyens d'entraînement motorisés (112, 122; 1110) pour faire varier la direction de visée de la caméra.

7. Terminal selon la revendication 6, caractérisé en ce que les moyens d'entraînement (112, 122; 1110) font varier la direction de visée de la caméra en site et en azimut.

8. Terminal selon la revendication 7, dans lequel le boîtier du terminal comprend une partie fixe (110) et une partie déplaçable (120) articulée à la partie fixe autour d'un axe horizontal (A100) et abritant la caméra (200), caractérisé en ce que lesdits moyens d'entraînement agissent sur la partie du boîtier (120) qui abrite la caméra.

9. Terminal selon la revendication 8, caractérisé en ce que les moyens d'entraînement (112, 122; 1110) sont également aptes à faire pivoter ladite partie du boîtier qui abrite la caméra autour d'un axe (A200) perpendiculaire à la fois à l'axe d'articulation (A100) et à l'axe de visée (AV) de la caméra.

10. Terminal selon la revendication 6, caractérisé en ce que les moyens d'entraînement (112, 1318, 1320; 122, 1310, 1312, 1314) font varier la hauteur de la caméra et la direction en azimut de son axe de visée.

11. Terminal selon l'une des revendications 7 à 10, caractérisé en ce que les moyens d'entraînement comprennent deux moteurs électriques (112, 122) pouvant être commandés individuellement.

12. Terminal selon l'une des revendications 7 à 10, caractérisé en ce que les moyens d'entraînement comprennent un moteur électrique unique (1110) et deux embrayages (1120, 1124) reliés au moteur.

13. Terminal selon la revendication 7, caractérisé en ce que les moyens d'entraînement comprennent un support (1212) de l'optique (1210) de la caméra comportant trois points d'appui (A1, A2, A3) disposés selon un triangle rectangle, le point situé (A1) à l'angle droit du triangle étant constitué par une liaison à rotule (1214), et des moyens motorisés (1228, 1230) pour faire varier la position des deux autres points d'appui (A3, A2) dans une direction essentiellement perpendiculaire au plan du triangle.

14. Terminal selon la revendication 1, caractérisé en ce que le ou les paramètres de prise de vue sont choisis dans le groupe comprenant la direction de visée de la caméra et/ou de son optique, la longueur focale de l'optique, l'ouverture de l'optique et la colorimétrie de la caméra.

15. Terminal selon l'une des revendications précédentes, caractérisé en ce qu'il comprend en outre une source lumineuse (500) d'éclairage du sujet et en ce que les moyens de réglage sont aptes à agir sur l'intensité de la source, qui constitue l'un des paramètres de prise de vues.

16. Terminal selon l'une des revendications précédentes, caractérisé en ce que les moyens de réglage sont également aptes à agir sur des paramètres de transmission du son.

17. Terminal selon l'une des revendications précédentes, caractérisé en ce que, dans le mode de réglage distant, les informations de réglage sont véhiculées dans le réseau sous forme de mots numériques incorporés à des intervalles de temps prédéterminés dans la section "contrôles et indications" d'une trame normalisée de transmission numérique.

18. Terminal selon l'une des revendications précédentes, du type dans lequel le microphone (602) et le haut-parleur (603) sont incorporés à un combiné (600), caractérisé en ce que les moyens de commande manuelle comprennent au moins une touche de commande (610) prévue sur le combiné.

19. Terminal selon l'une des revendications 6 et 7, caractérisé en ce que les moyens d'entraînement motorisés agissent sur un miroir de renvoi (220) associé à l'optique de la caméra.

## Patentansprüche

1. Ton- und Sichtkommunikationsendgerät mit einem Gehäuse (100), einer mit einer Optik (210, 1210) versehenen Bildaufnahmekamera (200), einer Bildwiedergabeeinheit (300), einem Mikrophon (602) und einem Lautsprecher (603) und mit einer Zentraleinheit (700), welche Einrichtungen zur Kodierung/ Dekodierung von Bild- und Toninformationen und zur Schnittstellenkopplung mit diesen Elementen zur Kommunikation mit einem anderen Endgerät der gleichen Art mittels eines Digitalübertragungsnetzes (R) umfaßt, ferner mit Steuereinrichtungen (830, 250, 240, 510) zur Steuerung mindestens eines Parameters zur Bildaufnahme und mit manuellen Betätigungseinrichtungen (810, 400, 610), welche in der Lage sind, Einstellinformationen für die Steuerung des Parameters oder der Parameter zu erzeugen, dadurch gekennzeichnet, daß das Gerät zusätzlich umfaßt:
Mittel zur Umschaltung (820) zwischen einer Ortssteuerungsbetriebsart, in welcher die genannten Steuerinformationen den genannten Steuereinrichtungen zugeführt werden, und einer Fernsteuerungsbetriebsart, in welcher die genannten Steuerinformationen dem genannten anderen Endgerät über das Digitalnetz parallel zu den genannten Bild- und Toninformationen übertragen werden und in welcher Steuerinformationen, die von dem genannten anderen Endgerät empfangen werden, gleichermaßen über das Digitalnetz und parallel zu den Bild- und Toninformationen den genannten Steuereinrichtungen zugeführt werden.

2. Endgerät nach Anspruch 1, dadurch gekennzeichnet, daß bei der Herstellung einer Verbindung die Umschaltmittel (820) sich in der Ortssteuerungsbetriebsart befinden.

3. Endgerät nach Anspruch 2, dadurch gekennzeichnet, daß die Umschaltvorgänge der Umschaltmittel (820) von einer Betriebsart zur anderen durch die Zentraleinheit (700) gesteuert werden.

4. Endgerät nach Anspruch 3, dadurch gekennzeichnet, daß es weiterhin eine Einrichtung umfaßt, um eine Berechtigungsinformation zum Umschalten in die Fernsteuerungsbetriebsart zu erzeugen und daß die Zentraleinheit Einrichtungen umfaßt, um die Umschaltmittel (820) nur dann auf die Fernsteuerungsbetriebsart umzuschalten, wenn eine derartige Berechtigungsinformation zugleich in dem Endgerät erzeugt und von einem anderen Endgerät empfangen wird.

5. Endgerät nach Anspruch 4, dadurch gekennzeichnet, daß die Zentraleinheit eine Erkennungseinrichtung für einen von einem anderen Endgerät empfangenen Code umfaßt und die Umschaltung der genannten Umschaltmittel (820) in die Fernsteuerungsbetriebsart bewirkt, wenn ein empfangener Code erkannt wird.

6. Endgerät nach einem der Ansprüche 1 bis 5, dadurch gekennzeichnet, daß die Steuereinrichtungen motorisierte Antriebsmittel (112, 122; 1110) umfassen, um die Blickrichtung der Kamera verändern zu lassen.

7. Endgerät nach Anspruch 6, dadurch gekennzeichnet, daß die Antriebsmittel (112, 122; 1110) eine Veränderung der Blickrichtung der Kamera im Höhen- und im Seitenwinkel bewirken.

8. Endgerät nach Anspruch 7, wobei das Gehäuse des Endgerätes einen feststehenden Teil (110) und einen beweglichen, an dem feststehenden Teil um eine horizontale Achse (A 100) schwenkbar gelagerten und die Kamera (200) einschließenden Teil (120) umfaßt, dadurch gekennzeichnet, daß die genannten Antriebsmittel auf den Teil des Gehäuses (120) einwirken, der die Kamera einschließt.

9. Endgerät nach Anspruch 8, dadurch gekennzeichnet, daß die Antriebsmittel (112, 122; 1110) gleichermaßen in der Lage sind, den genannten, die Kamera einschließenden Gehäuseteil um eine Achse (A 200) zu schwenken, welche zugleich senkrecht zur Lagerachse (A 100) und zur Sichtachse der Kamera (AV) steht.

10. Endgerät nach Anspruch 6, dadurch gekennzeichnet, daß die Antriebsmittel (112, 1318, 1320; 122, 1310, 1312, 1314) die Höhe der Kamera und die Azimuthrichtung ihrer Sichtachse verändern.

11. Endgerät nach einem der Ansprüche 7 bis 10, dadurch gekennzeichnet, daß die Antriebsmittel zwei einzeln ansteuerbare Elektromotoren (112, 122) umfassen.

12. Endgerät nach einem der Ansprüche 7 bis 10, dadurch gekennzeichnet, daß die Antriebsmittel einen einzigen Elektromotor (1110) und zwei mit dem Motor verbundene Kupplungen (1120, 1124) umfassen.

13. Endgerät nach Anspruch 7, dadurch gekennzeichnet, daß die Antriebsmittel einen Träger (1212) für die Optik (1210) der Kamera umfassen, welcher drei gemäß einem rechtwinkeligen Dreieck verteilte Abstützpunkte (A1, A2, A3) besitzt, wobei der am rechten Winkel des Dreiecks gelegene Punkt (A1) durch eine Kugelgelenkverbindung (1214) gebildet ist, und daß sie weiterhin motorisierte Mittel (1228, 1230) umfassen, um eine Veränderung der Stellung der beiden anderen Abstützpunkte (A3, A2) in einer im wesentlichen zur Ebene des Dreiecks senkrechten Richtung zu bewirken.

14. Endgerät nach Anspruch 1, dadurch gekennzeichnet, daß der oder die Parameter der Bildaufnahme aus der Gruppe ausgewählt werden, welche die Sichtrichtung der Kamera und/oder ihrer Optik, die Brennweite der Optik, die Blendenöffnung und die Farbmessung der Kamera umfaßt.

15. Endgerät nach einem der vorangehenden Ansprüche, dadurch gekennzeichnet, daß es zusätzlich eine Lichtquelle (500) zur Beleuchtung des Bildgegenstandes umfaßt und daß die Steuereinrichtungen in der Lage sind, auf die Intensität der Lichtquelle einzuwirken, was einen der Parameter der Bildaufnahme bildet.

16. Endgerät nach einem der vorangehenden Ansprüche, dadurch gekennzeichnet, daß die Steuereinrichtungen gleichermaßen in der Lage sind, auf Parameter der Tonübertragung einzuwirken.

17. Endgerät nach einem der vorangehenden Ansprüche, dadurch gekennzeichnet, daß in der Fernsteuerungsbetriebsart die Steuerinformationen in dem Netz in Form von Digitalwörtern transportiert werden, welche vorgegebenen Zeitintervallen in dem Abschnitt "Kontrollen und Anzeigen" eines normierten Rasters der Digitalübertragung eingefügt sind.

18. Endgerät nach einem der vorangehenden Ansprüche, wobei das Mikrophon (602) und der Lautsprecher (603) in einem Handapparat (600) eingebaut sind, dadurch gekennzeichnet, daß die manuellen Betätigungseinrichtungen mindestens eine in dem Handapparat (600) vorgesehene Steuertaste (610) umfassen.

19. Endgerät nach Anspruch 6 oder 7, dadurch gekennzeichnet, daß die motorisierten Antriebsmittel auf einen mit der Optik der Kamera verbundenen Umkehrspiegel einwirken.

## Claims

1. An audio and video communications terminal, of the type comprising a housing (100), a camera (200) provided with an optical system (210,1210), a display screen (300), a microphone (602), a loudspeaker (603), and a central unit (700) including sound and image information encoding and decoding means, and interface means in association with said elements for communication with another terminal of the same type via a digital transmission network (R), as well as adjustment means (830, 250, 240, 510) for adjusting at least one camera parameter and manual control means (810, 400, 610) suitable for generating control information for adjusting said parameter(s); characterized in that it further comprises:
switching means (820) for switching between a local adjustment mode in which said control information is applied to said adjustment means, and a remote adjustment mode in which said control information is sent to said other terminal over the digital network in parallel with said sound and image information, and in which control information received from said other terminal, likewise over the digital network and in parallel with sound and image information, is applied to said adjustment means.

2. A terminal according to claim 1, characterized in that while a call is being set up, the switching means (820) are in local mode.

3. A terminal according to claim 2, characterized in that the switchovers of the switching means (820) from one mode to the other are controlled by the central unit (700).

4. A terminal according to claim 3, characterized in that it further includes means for generating an authorization signal for authorizing switchover to remote mode, and in that the central unit includes means for switching over the switching means (820) to remote mode only after such authorization has been both generated in the terminal itself and received from another terminal.

5. A terminal according to claim 4, characterized in that the central unit includes means for recognizing a code received from another terminal and for switching over said switching means (820) to remote mode when said received code is recognized.

6. A terminal according to any one of claims 1 to 5, characterized in that the adjustment means include motorized drive means (112, 122; 1110) for changing the aiming direction of the camera.

7. A terminal according to claim 6, characterized in that the drive means (112, 122; 1110) vary the elevation and the bearing of the camera aiming direction.

8. A terminal according to claim 7, in which the terminal housing comprises a fixed portion (110) and a moving portion (120) housing the camera (200) and hinged to the fixed portion about a horizontal axis (A100), the terminal being characterized in that said drive means act on the portion (120) of the housing which houses the camera.

9. A terminal according to claim 8, characterized in that the drive means (112, 122; 1110) are likewise suitable for pivoting said portion of the housing which houses the camera about an axis (A200) perpendicular simultaneously to the hinge axis (A100) and to the aiming axis (AV) of the camera.

10. A terminal according to claim 6, characterized in that the drive means (112, 1318, 1320; 122, 1310, 1312, 1314) vary the height of the camera and the bearing direction of its aiming axis.

11. A terminal according to any one of claims 7 to 10, characterized in that the drive means comprise two individually controllable electric motors (112, 122).

12. A terminal according to any one of claims 7 to 10, characterized in that the drive means comprise a single electric motor (1110) and two clutches (1120, 1124) connected to the motor.

13. A terminal according to claim 7, characterized in that the drive means comprise a support (1212) for the camera optics (1210), the support including three bearing points (A1, A2, A3) disposed in a right angle triangle, the point (Al) situated at the right angle of the triangle being constituted by a ball link (1214), and motorized means (1228, 1230) for varying the positions of the other two bearing points (A3, A2) in directions essentially perpendicular to the plane of the triangle.

14. A terminal according to claim 1, characterized in that the camera parameter(s) are selected from the group comprising: the aiming direction of the camera and/or its optical system; focal length of the optical system; aperture of the optical system; and camera color parameters.

15. A terminal according to any preceding claim, characterized in that it further includes a light source (500) for illuminating the subject, and in that the adjustment means are suitable for acting on the intensity of the source, which constitutes one of the camera parameters.

16. A terminal according to any preceding claim, characterized in that the adjustment means are also suitable for acting on sound transmission parameters.

17. A terminal according to any preceding claim, characterized in that remote adjustment mode, adjustment information is conveyed over the digital network in the form of digital words incorporated in predetermined time intervals in the "control and flag" section of a standard digital transmission frame.

18. A terminal according to any preceding claim, of the type in which the microphone (602) and the loudspeaker (603) are incorporated in a handset (600), the terminal being characterized in that the manual control means include at least one control button (610) provided on the handset.

19. A terminal according to claim 6 or 7, characterized in that the motorized drive means act on a mirror (220) associated with the optics of the camera.
